(19) **Europäisches Patentamt / European Patent Office / Office européen des brevets**

(11) **EP 4 228 038 A1**

(12) # EUROPEAN PATENT APPLICATION
published in accordance with Art. 153(4) EPC

(43) Date of publication:
**16.08.2023   Bulletin 2023/33**

(21) Application number: **21944451.0**

(22) Date of filing: **10.12.2021**

(51) International Patent Classification (IPC):
***H01M 4/66*** *(2006.01)*

(86) International application number:
**PCT/CN2021/137135**

(87) International publication number:
**WO 2023/102903 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **LI, Mingling**
  **Ningde, Fujian 352100 (CN)**
- **PENG, Jia**
  **Ningde, Fujian 352100 (CN)**
- **LIU, Xin**
  **Ningde, Fujian 352100 (CN)**
- **HUANG, Qisen**
  **Ningde, Fujian 352100 (CN)**
- **LI, Keqiang**
  **Ningde, Fujian 352100 (CN)**
- **LI, Cheng**
  **Ningde, Fujian 352100 (CN)**
- **LIU, Xianghui**
  **Ningde, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **COMPOSITE CURRENT COLLECTOR, SHEET, SECONDARY BATTERY, BATTERY MODULE, BATTERY PACK, AND ELECTRICAL DEVICE**

(57)    The examples of the present application relate to a composite current collector, an electrode sheet, a secondary battery, a battery module, a battery pack, and an electrical apparatus. The composite current collector comprises a support layer and a conductive layer. The support layer has two first surfaces opposite to each other along a thickness direction. The conductive layer is provided on the two first surfaces, and the conductive layer comprises a first portion and a second portion, wherein the first portion comprises a first sub-portion and a second sub-portion provided on the two first surfaces, respectively, and the second portion comprises a third sub-portion and a fourth sub-portion, the third sub-portion and the first sub-portion being integrally provided, the fourth sub-portion and the second sub-portion being integrally provided, the third sub-portion and the fourth sub-portion both projecting from the support layer, and the third sub-portion and the fourth sub-portion being affixed to each other and fused as a whole. The conductive layer according to the examples of the present application has good structural stability and the over-current capability of the composite current collector is enhanced, thus significantly improving the electrical performance, safety performance, and machining performance of secondary batteries.

**FIG. 1**

EP 4 228 038 A1

## Description

### Technical Field

The present application relates to the technical field of batteries, and in particular to a composite current collector, an electrode sheet, a secondary battery, a battery module, a battery pack, and an electrical apparatus.

### Background Art

Secondary batteries are widely used in electric vehicles and consumer electronics because of their high energy density, high output power, long cycle life and low environmental pollution. As an important component in the preparation of secondary batteries, the composite current collector has a significant impact on the electrochemical performance of secondary batteries. Compared with conventional composite current collectors, the sandwich structure of "metal-insulating polymer-metal" can effectively improve the electrochemical performance of the secondary batteries. However, there are many problems in the existing composite current collectors, such as the poor over-current capability caused by insufficient bonding strength between the composite current collector and the externally connected metal foil (for machining tabs), and the complicated preparation process, which have a significant impact on the electrical performance, safety performance, and machining performance of the secondary batteries. Therefore, there is an urgent need to develop a new type of composite current collector.

### Summary of the Invention

The present application is conducted in view of the above problems, and its purpose is to provide a composite current collector, an electrode sheet, a secondary battery, a battery module, a battery pack, and an electrical apparatus.

In order to achieve the above purpose, the first aspect examples of the present application provide a composite current collector that comprises a support layer and a conductive layer. The support layer has two first surfaces opposite to each other along a thickness direction. The conductive layer is provided on the two first surfaces, and the conductive layer comprises a first portion and a second portion, wherein the first portion comprises a first sub-portion and a second sub-portion provided on the two first surfaces, respectively, and the second portion comprises a third sub-portion and a fourth sub-portion, the third sub-portion and the first sub-portion being integrally provided, the fourth sub-portion and the second sub-portion being integrally provided, the third sub-portion and the fourth sub-portion both projecting from the support layer, and the third sub-portion and the fourth sub-portion being affixed to each other and fused as a whole.

Thus, in the examples of the present application, the first sub-portion and the third sub-portion are integrally provided, the second sub-portion and the fourth sub-portion are integrally provided, the third sub-portion and the fourth sub-portion are affixed to each other and fused as a whole. That is, the conductive layer is of an integral structure, and the configuration in which the conductive layer is fused as a whole makes it possible that: 1) the disadvantages of the conventional welding process are avoided, the need for an externally connected metal foil is structurally eliminated, and the problem of poor welding of the externally connected metal foil to the conductive layer is avoided, thus significantly improving the over-current capability of the composite current collector, and improving the electrical performance of the secondary battery; 2) the hot melting process of the present application effectively avoids the cracking of the conductive layer and the support layer of the composite current collector during the production process, as well as the fracturing or even cracking of the root of the tab caused by processes (such as rolling), thus significantly increasing the production yield of the composite current collector and the safety performance of secondary batteries; and 3) the machining consistency of composite current collectors is improved, and the problem of misalignment of the top and bottom workpiece edges and burrs in the tab cutting process is avoided, which prevents folding of the die cutting and winding processes, thus improving the production yield and safety performance. In conclusion, the composite current collector of the present application can significantly improve the electrical performance, safety performance, and production yield of secondary batteries.

In any of embodiments, the third sub-portion, an end portion of the support layer along the first direction, and the fourth sub-portion are affixed to each other and fused as a whole, wherein the first direction is perpendicular to the thickness direction; and the end portion can function to support and protect the third sub-portion and the fourth sub-portion.

In the subsequent processes such as rolling, the third sub-portion and the fourth sub-portion may be partially stretched, and the end portion provides a support force for the third sub-portion and the fourth sub-portion, thus making it possible to avoid fracturing or cracking of the third sub-portion and the fourth sub-portion. In addition, for the composite current collector of this embodiment, there exists support of the support layer at the root of the tab after the tab is cut, which increases the stiffness of the root of the tab and prevents folding of the tab, thus significantly improving the safety performance during the preparation of secondary batteries.

In any of embodiments, the end portion along the first direction has a width of 1 mm to 10 mm, optionally 5 mm to 8 mm. The end portion is in the above range of width, which can further improve the strength of connection of the end portion with the third sub-portion and the fourth sub-portion, and further improve the strength of support for the third sub-portion and the fourth sub-portion.

In any of embodiments, the third sub-portion comprises two second surfaces opposite to each other along the thickness direction, and the first sub-portion projects with respect to the second surfaces along the thickness direction.

As a result, the third sub-portion of the examples of the present application has a relatively moderate thickness, which can improve the energy density of a secondary battery using the composite current collector to a large extent, while ensuring the over-current capability of the secondary battery that uses the composite current collector and the safety performance of the secondary battery.

In any of embodiments, the third sub-portion comprises two second surfaces opposite to each other along the thickness direction; and the first sub-portion comprises two third surfaces opposite to each other along the thickness direction, one of the two third surfaces being flush with the second surface.

As a result, the first sub-portion of the examples of the present application has a relatively small thickness, which can improve to some extent the energy density of a secondary battery that uses the composite current collector.

In any of embodiments, the first portion has a thickness of A and the second portion has a thickness of B, wherein $0.03 \leq A/B \leq 1$; optionally, $0.2 \leq A/B \leq 1$. The ratio of thickness of the first portion and the second portion falls within the above range, which can ensure the energy density of the secondary battery that uses the composite current collector and improve the over-current capability of the secondary battery.

In any of embodiments, the first sub-portion has a thickness greater than or equal to that of the second sub-portion. It is possible to not thin the second sub-portion during the machining process, which can reduce the cost and facilitate machining and molding.

In any of embodiments, the third sub-portion has a thickness greater than or equal to that of the fourth sub-portion. It is possible to not thin the fourth sub-portion during the machining process, which can reduce the cost and facilitate machining and molding.

In any of embodiments, the second portion further comprises a connecting layer disposed between the third sub-portion and the fourth sub-portion, and the connecting layer has a melting point less than that of the third sub-portion.

As a result, the connecting layer has a relatively lower melting point, and when machining the second portion, the connecting layer will be fused first, which facilitates adhering and affixing the third sub-portion and the fourth sub-portion as a whole, thus facilitating the fusing of the third sub-portion and the fourth sub-portion as a whole.

In any of embodiments, the connecting layer comprises at least one of a metal layer and an organic conductive polymer layer. Optionally, the metal comprises at least one of tin, indium, bismuth, and cadmium. Optionally, the organic conductive polymer comprises at least one of polypyrrole, polythiophene, polyaniline, polyacetylene, polyphenylene, and polyphenylene acetylene. When the connecting layer is made of metal, it is more conducive to adequate fusing with the third sub-portion and the fourth sub-portion. When the connecting layer is made of organic conductive polymer, the organic conductive polymer can not only adhere the third sub-portion and the fourth sub-portion, but also be fused and affixed with the support layer, thus enabling further improvement of the strength of connection between the second portion and the support layer.

In any of embodiments, the connecting layer has a thickness of 1 $\mu$m to 5 $\mu$m. When the thickness of the connecting layer is within the above range, it is conducive to assist adequate fusing and bonding of the third sub-portion and the fourth sub-portion, that is, to facilitate adequate fusing of the second portion into a whole.

In any of embodiments, the support layer comprises at least two support portions spaced along a first direction, wherein the second portion is provided between two adjacent support portions, and the first direction is perpendicular to the thickness direction. The composite current collector of this structure, by slitting, can form components for multiple electrode assemblies.

A second aspect of the present application provides an electrode sheet comprising a composite current collector as described in any of the examples of the first aspect of the present application and an active material layer, wherein the active material layer is provided on the surface of the first portion of the composite current collector.

A third aspect of the present application provides a secondary battery comprising an electrode sheet as described in the second aspect examples of the present application.

A fourth aspect of the present application provides a battery module comprising a secondary battery as described in the third aspect examples of the present application.

A fifth aspect of the present application provides a battery pack comprising a secondary battery as described in the third aspect examples of the present application or a battery module as described in the fourth aspect examples of the present application.

A sixth aspect of the present application provides an electrical apparatus comprising a secondary battery as described in the third aspect examples of the present application, a battery module as described in the fourth aspect examples of the present application, or a battery pack as described in the fifth aspect of the present application.

A seventh aspect of the present application provides a manufacturing method for a composite current collector, comprising: providing a support layer that comprises two first surfaces opposite to each other along a thickness direction; providing a first conductive sheet and a second conductive sheet, and connecting the first conductive sheet and the second conductive sheet to the two first surfaces, respectively, wherein the first conductive sheet comprises a first sub-portion and a third sub-portion, and the second conductive sheet comprises a second sub-portion and a fourth sub-portion, the first sub-portion and the second sub-portion being provided on the two first surfaces, respectively, and the third sub-portion and the fourth sub-portion both projecting from the support layer; and the third sub-portion and the fourth sub-portion are affixed to each other and fused as a whole.

Therefore, the composite current collector prepared by the manufacturing method of the example of the present application does not require transfer welding, but can be directly subjected to laser die cutting to obtain a tab, which greatly simplifies the process and improves the over-current capability of the tab. Moreover, the edges are flush without burrs during the process of mechanical slitting, and the conductive layer of the second portion is well connected with the support layer, so that there will be no cracking and other problems in the cold pressing process. Therefore, the electrochemical performance of the secondary battery prepared using this composite current collector is excellent.

In any of embodiments, this method further comprises: removing part of the first sub-portion along the thickness direction to thin the first sub-portion. The first sub-portion has a relatively lower thickness, which can improve the energy density of the secondary battery to some extent.

In any of embodiments, this method further comprises: removing part of the third sub-portion along the thickness direction to thin the third sub-portion. By thinning the third sub-portion, it is possible to improve the energy density while ensuring the over-current capability.

**Description of Drawings**

In order to illustrate the technical solutions of the examples of the present application more clearly, the following briefly introduces the drawings required in the examples of the present application. Obviously, the drawings described below are only some examples of the present application. For those of ordinary skill in the art, other drawings can also be obtained according to the drawings without any creative effort.

Fig. 1 is a structural schematic diagram of a composite current collector provided in some examples of the present application;

Fig. 2 is a structural schematic diagram of a composite current collector provided in some other examples of the present application;

Fig. 3 is a structural schematic diagram of a composite current collector provided in some other examples of the present application;

Fig. 4 is a structural schematic diagram of a composite current collector provided in some other examples of the present application;

Fig. 5 is a schematic diagram of a manufacturing process for a composite current collector provided in some examples of the present application;

Fig. 6 is a state schematic diagram of a manufacturing process for a composite current collector provided in some examples of the present application;

Fig. 7 is another state schematic diagram of a manufacturing process for a composite current collector provided in some examples of the present application;

Fig. 8 is a flow chart of a manufacturing method for a composite current collector provided in some other examples of the present application;

Fig. 9 is another state schematic diagram of a manufacturing process for a composite current collector provided in some examples of the present application;

Fig. 10 is another state schematic diagram of a manufacturing process for a composite current collector provided in some examples of the present application;

Fig. 11 is a flow chart of a manufacturing method for a composite current collector provided in some other examples of the present application;

Fig. 12 is another state schematic diagram of a manufacturing process for a composite current collector provided in some examples of the present application;

Fig. 13 is another state schematic diagram of a manufacturing process for a composite current collector provided in some examples of the present application;

Fig. 14 is a structural schematic diagram of an electrode sheet provided in some examples of the present application;

Fig. 15 is a cross-sectional structural schematic diagram of an electrode sheet shown in Fig. 14 taken along the line A-A;

Fig. 16 is a structural schematic diagram of an electrode assembly of a secondary battery provided in some examples of the present application;

Fig. 17 is an exploded schematic diagram of a secondary battery provided in some examples of the present application;

FIG. 18 is a partial structural schematic diagram of a battery module provided in some examples of the present application;

Fig. 19 is an exploded schematic diagram of a battery pack provided in some examples of the present application; and

Fig. 20 is a structural schematic diagram of an electrical apparatus provided in some examples of the present application.

In the accompanying drawings, the accompanying drawings are not necessarily drawn to actual scale.

Here, the reference numerals in the drawings are as follows:

X, thickness direction; Y, first direction;
1, electrical apparatus; 10, battery pack; 11, lower box; 12, upper box; 20, battery module; 30, secondary battery;
31, top cover assembly; 32, case; 40, electrode assembly; 50, electrode sheet; 41, separator;
60, composite current collector;
70, support layer; 71, first surface; 72, end portion; 73, support portion;
80, conductive layer; 81, first portion; 811, first sub-portion; 8111, third surface; 812, second sub-portion; 82, second portion; 821, third sub-portion; 8211, second surface; 822, fourth sub-portion; 823, connecting layer;
90, active material layer;
100, a protective layer.

## Detailed Description

Hereinafter, the embodiments of a composite current collector and its manufacturing method, an electrode sheet, a secondary battery, a battery module, a battery pack, and an electrical apparatus of the present application are specifically disclosed in detail with reference to the accompanying drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if a range of 60-120 and 80-110 is listed for a particular parameter, it is understood that a range of 60-110 and 80-120 is also expected. Additionally, if the minimum range values 1 and 2 are listed, and if the maximum range values 3, 4, and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, the method comprises steps (a) and (b), indicating that the method may include steps (a) and (b) performed sequentially, or may include steps (b) and (a) performed sequentially. For example, when it is mentioned that the method can also include step (c), it means that step (c) can be added to the method in any order. For example, the method can include steps (a), (b), and (c), or steps (a), (c), and (b), or steps (c), (a), and (b).

If not specifically stated, "comprising" and "containing" mentioned in the present application indicate open inclusion or closed inclusion. For example, "comprising" and " containing" may indicate that other components not listed may also be included or contained, or only the listed components may be included or contained.

If not specifically stated, the term "or" is inclusive in the present application. By way of example, the phrase "A or B" means "A, B, or both A and B." More specifically, the condition "A or B" is satisfied by any of the following: A is true (or present) and B is false (or absent); A is false (or absent) and B is true (or present); or both A and B are true (or present).

It is to be understood that relational terms such as "first", "second", etc., are used only to distinguish one entity or operation from another and do not necessarily require or imply any actual relationship or order between these entities or operations.

The foregoing Summary of the Invention are not intended to describe every disclosed embodiment or every implementation of the present application. The following description illustrates exemplary embodiments in more detail. In various places throughout the present application, guidance is provided through a series of examples, and these examples can be used in various combinations. In each example, the enumeration is performed to give only representative groups and should not be interpreted as exhaustive.

The inventor found that the "sandwich" composite current collector composed of a support layer and a conductive layer located on the two opposite surfaces of the support layer has many defects, which may cause the electrical performance, safety performance, and machining performance of the secondary battery to fail to meet the requirements of large-scale industrialization. Specifically:

For a composite current collector in the prior art, the main body thereof is composed of a support layer and a conductive layer on the surfaces of the support layer. In order for the current collected in the main body to be output outwards/the external current to charge the secondary battery, the preparation process of the composite current collector requires the external connection of a metal foil on the surface of the conductive layer (the externally connected metal foil is used for machining a tab), with the external connection being conducted by welding (also known as "transfer welding" in the industry). However, there are many defects in this welding connection mode: 1) due to the thin conductive layer of the composite current collector, this conventional welding process makes the connection strength between the externally connected metal foil and the conductive layer insufficient, which leads to the problem of pseudo welding, and then leads to the limitation of the over-current capability in the welding area, which affects the electrical performance of the secondary battery; 2) insufficient welding strength also makes the externally connected metal foil and the main body easily fall off in the subsequent preparation processes such as cold pressing and die cutting, which significantly reduces the production yield of composite current collectors and the safety performance of the secondary battery; 3) in order to machine tabs, both the two conductive layers need to be externally connected with metal foils, which makes the upper and lower layers of metal foils need to be processed separately when cutting the tabs on the externally connected metal foil, which leads to the problems of edge misalignment and burrs of the cut upper and lower tabs, reducing the production yield and safety performance; and 4) the composite current collector prepared by the conventional transfer welding process lacks the support of the support layer at the root of the tab after the tab is cut, resulting in the tab being prone to folding, which significantly reduces the safety performance of the secondary battery in the preparation process.

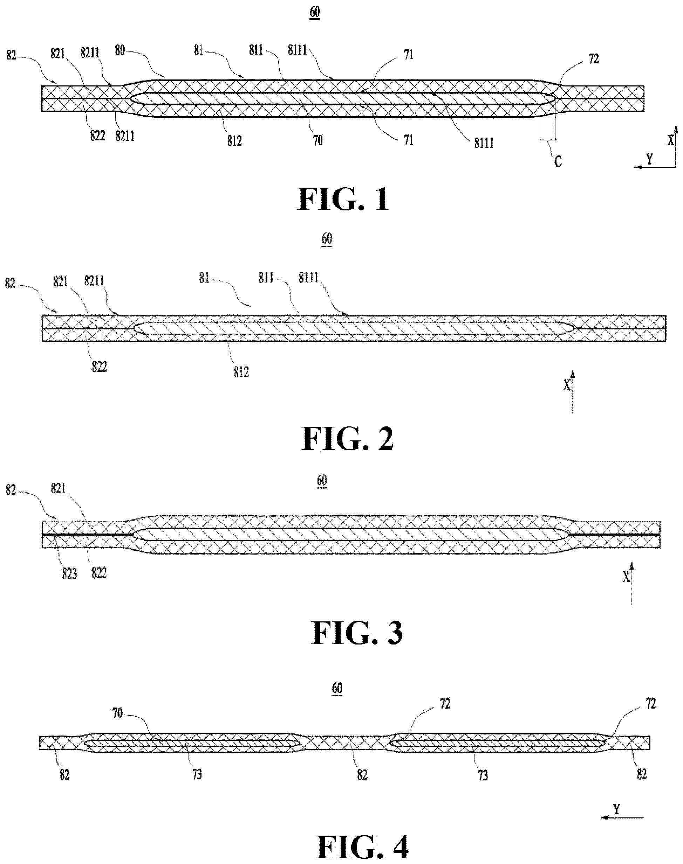

Based on the above defects of the existing composite current collector, a composite current collector that can significantly improve the electrical performance, safety performance, and machining performance of secondary batteries has been developed in the present application. Next, a detailed description of the examples of the present application is provided in conjunction with Figs. 1 to 20.

[Composite current collector]

Fig. 1 is a structural schematic diagram of a composite current collector provided in some other examples of the present application.

As shown in Fig. 1, the composite current collector 60 provided in the example of the present application comprises a support layer 70 and a conductive layer 80.

The support layer 70 of the example of the present application functions to support and protect the conductive layer 80. The support layer 70 has two first surfaces 71 opposite to each other along a thickness direction X. The X direction illustrated in Fig. 1 indicates the thickness direction.

The material of the support layer 70 comprises one or more of a polymer material and a polymer matrix composite material. The polymer matrix composite material comprises a polymer material and an additive, where the additive is at least one of an inorganic non-metallic material and a metallic material.

The polymer material comprises at least one of polyamide, polyimide, polyethylene terephthalate, polybutylene terephthalate, polyethylene naphthalate, polycarbonate, polyethylene, polypropylene, polypropylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyformaldehyde, polyphenylene ether polyphenylene sulfide, polyethylene glycol, poly(sulfur nitride), polyphenylene, polypyrrole, polyaniline, polythiophene, polypyridine, cellulose, starch, protein, epoxy resin, phenolic resin, their derivatives, their cross-linkers, and their copolymers. Optionally, the polymer material is at least one of polyamide, polyimide, polyethylene terephthalate, polypropylene, and polyphenylene sulfide.

The polymer matrix composite material comprises a polymer material and an additive. The additive is at least one of an inorganic non-metallic material and a metallic material. Optionally, the inorganic non-metallic material comprises one or more of a carbon-based material, alumina, silica, silicon nitride, silicon carbide, boron nitride, silicate, and titanium oxide. The metallic material comprises one or more of magnesium, calcium, strontium, lead, zinc, tin, antimony, bismuth, silver, and ruthenium.

The conductive layer 80 of the example of the present application is provided on the two first surfaces 71 of the support layer 70. The conductive layer 80 can be formed on the support layer 70 by means of at least one of mechanical rolling, binding, vapor deposition, electroless plating, or electroplating, among which vapor deposition or electroplating may be selected, that is, the conductive layer 80 can be a vapor deposition layer or electroplated layer, so that a better tight bond between the conductive layer 80 and the support layer 70 can be achieved, and thus the support layer 70 can effectively function to support and protect the conductive layer 80.

In some examples, the conductive layer 80 can be connected to the support layer 70 by an adhesive, so as to improve the strength of connection between the conductive layer 80 and the support layer 70. Exemplarily, the binder is selected from at least one of polypropylene, carboxymethyl cellulose, polyacrylate, styrene butadiene rubber, sodium polyacrylate, polyurethane, polyethyleneimine, polyvinylidene fluoride, chloroprene rubber, nitrile rubber, silicone rubber, polyvinyl acetate, urea-formaldehyde resin, phenolic resin, epoxy resin, silane coupling agent, titanate coupling agent, zirconium coupling agent, aluminate coupling agent and borate coupling agent.

The material of the conductive layer 80 may include a metal. Exemplarily, when the composite current collector 60 is a positive composite current collector, the conductive layer 80 is a positive conductive layer, and the material of the positive conductive layer is selected from aluminum or an aluminum-based alloy, which may be an aluminum-nickel alloy, an aluminum-titanium alloy, or an aluminum-silver alloy, etc. When the composite current collector 60 is a negative composite current collector, the conductive layer 80 is a negative conductive layer, and the material of the negative conductive layer is selected from copper or a copper-based alloy, which may be a copper-nickel alloy, copper-titanium alloy or copper-silver alloy, etc.

Of course, in some examples, in the process of forming the conductive layer 80, other substances that facilitate machining, such as a low-melting point metal or a low-melting point organic conductive polymer layer, can also be added. Herein, the low melting point is relative to the main body material of the conductive layer 80. Exemplarily, the main body material of the conductive layer 80 is aluminum, and the low-melting point metal refers to a metal of which the melting point is lower than that of the aluminum metal, and the melting point of the low-melting point organic conductive polymer layer is lower than that of the aluminum metal.

The conductive layer 80 comprises a first portion 81 and a second portion 82. The first portion 81 comprises a first sub-portion 811 and a second sub-portion 812 provided on the two first surfaces 71, respectively, and the second portion 82 comprises a third sub-portion 821 and a fourth sub-portion 822, the third sub-portion 821 and the first sub-portion 811 being integrally provided, the fourth sub-portion 822 and the second sub-portion 812 being integrally provided, the third sub-portion 821 and the fourth sub-portion 822 both projecting from the support layer 70, and the third sub-portion 821 and the fourth sub-portion 822 being affixed to each other and fused as a whole. The third sub-portion 821 and the fourth sub-portion 822 are cut as a whole structure, and the cut edges are flush and burr-free, which can improve the safety performance and production yield of secondary batteries of the composite current collector 60.

The first sub-portion 811 and the second sub-portion 812 of the first portion 81 are both provided on the first surface 71 for coating an active material layer. The third sub-portion 821 and the fourth sub-portion 822 of the second portion 82 are used as tabs.

The first sub-portion 811 comprises two third surfaces 8111 opposite to each other along the thickness direction X. The third sub-portion 821 comprises two second surfaces 8211 opposite to each other along the thickness direction X. The first sub-portion 811 and the third sub-portion 821 are integrally provided, and one of the two third surfaces 8111 of the first sub-portion 811 may be flush with one of the two second surfaces 8211, or the first sub-portion 811 may project from the second surfaces 8211 or may be concave with respect to the second surfaces 8211.

The second sub-portion 812 comprises two fourth surfaces opposite to each other along the thickness direction X. The fourth sub-portion 822 comprises two fifth surfaces opposite to each other along the thickness direction X. The second sub-portion 812 and the fourth sub-portion 822 are integrally provided, and one of the two fourth surfaces of the second sub-portion 812 may be flush with one of the two fifth surfaces, or the second sub-portion 812 may project from the fifth surface or may be concave with respect to the fifth surface.

The first sub-portion 811 and the third sub-portion 821 are integrally provided, and the second sub-portion 812 and the fourth sub-portion 822 are integrally provided. When the first sub-portion 811, the third sub-portion 821, the second sub-portion 812, and the fourth sub-portion 822 form the conductive layer 80, the first sub-portion 811 and the second sub-portion 812 of the same thickness can be used, or the first sub-portion 811 and the second sub-portion 812 of different thicknesses can be used. The third sub-portion 821 and the fourth sub-portion 822 with the same thickness can be used, or the third sub-portion 821 and the fourth sub-portion 822 with different thickness can also be used.

In the examples of the present application, the first sub-portion 811 and the third sub-portion 821 are integrally provided, the second sub-portion 812 and the fourth sub-portion 822 are integrally provided, the third sub-portion 821 and the fourth sub-portion 822 are affixed to each other and fused as a whole. That is, the conductive layer 80 is of an integral structure, and the configuration in which the conductive layer 80 is fused as a whole makes it possible that: 1) the disadvantages of the conventional welding process are avoided, the need for an externally connected metal foil is structurally eliminated, and the problem of poor welding of the externally connected metal foil to the conductive layer is avoided, thus significantly improving the over-current capability of the composite current collector 60, and improving the electrical performance of the secondary battery; 2) the hot melting process of the present application effectively avoids the cracking of the conductive layer 80 and the support layer 70 of the composite current collector 60 during the process, as well as the fracturing or even cracking of the root of the tab caused by processes (such as rolling), thus significantly increasing the production yield of the composite current collector 60 and the safety performance of secondary batteries; and 3) the machining consistency of composite current collectors 60 is improved, and the problem of misalignment of the top and bottom workpiece edges and burrs in the tab cutting process is avoided, which prevents folding of the tab during the die cutting and winding processes, thus improving the production yield and safety performance. In conclusion, the composite current collector of the present application can significantly improve the electrical performance, safety performance, and production yield of secondary batteries.

Referring further to Fig. 1, in some embodiments, the third sub-portion 821, an end portion 72 of the support layer 70 along the first direction Y, and the fourth sub-portion 822 are affixed to each other and fused as a whole. The Y direction illustrated in Fig. 1 indicates the first direction, with the first direction Y being perpendicular to the thickness direction X.

The third sub-portion 821 and the end portion 72 as well as the fourth sub-portion 822 are fused as a whole. In other words, the three are connected to each other, and the end portion 72 can function to support and protect the third sub-portion 821 and the fourth sub-portion 822. In the subsequent processes such as rolling, the third sub-portion 821 and the fourth sub-portion 822 may be partially stretched, and the end portion 72 provides a support force for the third sub-portion 821 and the fourth sub-portion 822, thus making it possible to avoid fracturing or cracking of the third sub-portion 821 and the fourth sub-portion 822. For the composite current collector 60 of this example, there exists support of the support layer 70 at the root of the tab after the tab is cut, which increases the stiffness of the root of the tab and prevents folding of the tab, thus significantly improving the safety performance during the preparation of secondary batteries.

Optionally, the end portion 72 along the first direction Y has a width of 1 mm to 10 mm. For example, it may be 1 mm, 2 mm, 3 mm, 4 mm, 5 mm, 6 mm, 7 mm, 8 mm, 9 mm, or 10 mm; or the range of width may consist of any two of the aforementioned values; optionally, it may be 5 mm to 8 mm. The end portion 72 is in the above range of width, which can further improve the strength of connection of the end portion 72 with the third sub-portion 821 and the fourth sub-portion 822, and further improve the strength of support for the third sub-portion 821 and the fourth sub-portion 822. The width is measured in the following way: first, a micrometer is used to measure the thickness of the end portion 72, whereby the critical position of the end portion 72 near the first portion 81 and the critical position near the second portion 82 can be roughly determined; and then, near the critical positions, the composite current collector 60 is cut in section using an NEC IB-19500 and observed using a Zeiss Sigma 300 scanning electron microscope to further measure the thickness of the support layer 70 and the conductive layer 80 and to confirm a critical end face position; and after the end face position is determined, a scale is used to measure the width of the end portion 72. The dimension of C in Fig. 1 approximately represents the width dimension of the end portion 72 along the first direction Y.

Referring further to Fig. 1, in some embodiments, the first sub-portion 811 project with respect to the second surfaces 8211 of the third sub-portion 821 along the thickness direction X. The third sub-portion 821 has a relatively moderate thickness, which can improve to a large extent the energy density of the secondary battery that uses the composite current collector 60, while ensuring the over-current capability of the secondary battery that uses the composite current collector 60 and the safety performance of the secondary battery.

Fig. 2 is a structural schematic diagram of a composite current collector provided in some other examples of the present application.

As shown in Fig. 2, in some other embodiments, one of the two third surfaces 8111 of the first sub-portion 811 is flush with the second surface 8211 of the third sub-portion 821. The first sub-portion 811 has a relatively small thickness, which can improve to some extent the energy density of the secondary battery that uses the composite current collector 60.

In some embodiments, the second sub-portion 812 project with respect to the fifth surface of the fourth sub-portion 822 along the thickness direction X. The fourth sub-portion 822 has a relatively moderate thickness, which can improve to a large extent the energy density of the secondary battery that uses the composite current collector 60, while ensuring the over-current capability of the secondary battery that uses the composite current collector 60.

In some other embodiments, one of the two fourth surfaces of the second sub-portion 812 is flush with the fifth surface of the fourth sub-portion 822. The second sub-portion 812 has a relatively small thickness, which can improve to some extent the energy density of the secondary battery that uses the composite current collector 60.

In some embodiments, the first portion 81 has a thickness of A and the second portion 82 has a thickness of B, with A and B satisfying the following relation: $0.03 \leq A/B \leq 1$. For example, A/B is 0.03, 0.1, 0.2, 0.3, 0.4, 0.5, 0.6, 0.7, 0.8, 0.9, or 1; or the range of A/B ratio may be composed of any two of the aforementioned values; optionally, $0.2 \leq A/B \leq 1$. The ratio of thickness of the first portion 81 and the second portion 82 satisfies the above range, which can ensure the energy density of the secondary battery that uses the composite current collector 60 and improve the over-current capability of the secondary battery.

Herein, the thickness of the first portion 81 refers to the overall thickness of the first portion 81 along the thickness direction X. Exemplarily, the first portion 81 comprises the first sub-portion 811 and the second sub-portion 812, and the thicknesses of the first sub-portion 811 and the second sub-portion 812 along the thickness direction X add up to A.

Herein, the thickness of the second portion 82 refers to the overall thickness of the second portion 82 along the thickness direction X. Exemplarily, the second portion 82 comprises the third sub-portion 821 and the fourth sub-portion 822, and the thicknesses of the third sub-portion 821 and the fourth sub-portion 822 along the thickness direction X add up to B. Alternatively, the second portion 82 further comprises other components such as a connecting layer, then the thicknesses of the third sub-portion 821, the connecting layer, and the fourth sub-portion 822 along the thickness direction X add up to B.

Optionally, the thickness A of the first portion 81 is $1 \ \mu m \leq A \leq 26 \ \mu m$, for example, 1 um, 3 um, 6 um, 8 $\mu m$, 9 $\mu m$, 10 $\mu m$, 11 $\mu m$, 12 $\mu m$, 15 $\mu m$, 18 $\mu m$, 20 $\mu m$, 22 $\mu m$, 25 $\mu m$, and 26 um; or the range of thickness may be composed of any two of the aforementioned values.

Optionally, the thickness B of the second portion 82 is $5 \ \mu m \leq B \leq 26 \ \mu m$, for example, 5 $\mu m$, 6 $\mu m$, 8 $\mu m$, 9 $\mu m$, 10 $\mu m$, 11 $\mu m$, 12 $\mu m$, 15 $\mu m$, 18 $\mu m$, 20 $\mu m$, 22 $\mu m$, 25 $\mu m$, 26 $\mu m$; or the range of thickness may be composed of any two of the aforementioned values.

In some embodiments, the first sub-portion 811 has a thickness greater than or equal to that of the second sub-portion 812. It is possible to not thin the second sub-portion 812 during the machining process, which can reduce the cost and facilitate machining and molding.

In some embodiments, the third sub-portion 821 has a thickness greater than or equal to that of the fourth sub-portion 822. It is possible to not thin the fourth sub-portion 822 during the machining process, which can reduce the cost and facilitate machining and molding.

Fig. 3 is a structural schematic diagram of a composite current collector provided in some other examples of the present application.

As shown in Fig. 3, in some embodiments, the second portion 82 further comprises a connecting layer 823 disposed between the third sub-portion 821 and the fourth sub-portion 822, and the connecting layer 823 has a melting point less than that of the third sub-portion 821. The connecting layer 823 has a relatively lower melting point, and when machining the second portion 82, the connecting layer 823 will be fused first, which facilitates adhering and affixing the third sub-portion 821 and the fourth sub-portion 822 as a whole, thus facilitating the fusion of the third sub-portion 821 and the fourth sub-portion 822 as a whole.

Optionally, the melting point of the connecting layer 823 is less than that of the fourth sub-portion 822, and the melting point of the connecting layer 823 is lower than those of both the third sub-portion 821 and the fourth sub-portion 822, which facilitates adhering and affixing the third sub-portion 821 and the fourth sub-portion 822 as a whole when machining the second portion 82.

Optionally, the connecting layer 823 comprises at least one of a metal layer and an organic conductive polymer layer. In other words, the connecting layer 823 is a metal layer, an organic conductive polymer layer, or a composite layer of a metal layer and an organic conductive polymer layer.

As an example of the material of the metal layer, the metal comprises at least one of tin, indium, bismuth, and cadmium. In other words, the metal is a single metal such as tin, indium, bismuth or cadmium; it can also be a tin-indium alloy, tin-bismuth alloy, tin-cadmium alloy, indium-bismuth alloy, bismuth-cadmium alloy, tin-indium-bismuth alloy or tin-bismuth-cadmium alloy. When the connecting layer 823 is made of metal, it is more conducive to adequate fusion with the third sub-portion 821 and the fourth sub-portion 822.

When the connecting layer 823 comprises a metal layer, the metal layer may include one or more first sub-layers, and if multiple first sub-layers are used, each of the first sub-layers may be made of the same metal material or may be made of different materials.

As an example of the material of the organic conductive polymer layer, the organic conductive polymer comprises at least one of polypyrrole, polythiophene, polyaniline, polyacetylene, polyphenylene, and polyphenylene acetylene. When the connecting layer 823 is made of organic conductive polymer, the organic conductive polymer can not only adhere the third sub-portion 821 and the fourth sub-portion 822, but also be fused and adhered with the support layer 70, thus enabling further improvement of the strength of connection between the second portion 82 and the support layer 70.

When the connecting layer 823 comprises an organic conductive polymer layer, the organic conductive polymer layer may include one or more second sub-layers, and if multiple second sub-layers are used, each of the second sub-layers may be made of the same organic conductive polymer material or may be made of different organic conductive polymer materials.

In some embodiments, the connecting layer 823 has a thickness of 1 $\mu m$ to 5 $\mu m$, for example, 1 $\mu m$, 2 $\mu m$, 3 $\mu m$, 4 $\mu m$, or 5 $\mu m$; or the range of thickness may be composed of any two of the aforementioned values. When the thickness of the connecting layer 823 is within the above range, it is conducive to assist adequate fusing and bonding of the third sub-portion 821 and the fourth sub-portion 822, that is, to facilitate adequate fusion of the second portion 82 into a whole.

Fig. 4 is a structural schematic diagram of a composite current collector provided in some other examples of the present application.

As shown in Fig. 4, in some embodiments, the support layer 70 comprises at least two support portions 73 spaced along the first direction Y, wherein the second portion 82 is provided between two adjacent support portions 73. The composite current collector 60 of this structure, by slitting, can form components for multiple electrode assemblies.

In some other embodiments, the support layer 70 comprises one support portion 73, and the second portion 82 projects from at least one end portion 72 of the support portion 73 along the first direction Y. Exemplarily, the second portion 82 projects from one end portion 72 of the support portion 73 along the first direction Y, or from both end portions 72 of the support portion 73 along the first direction Y.

[Manufacturing method for composite current collector]

Examples of the present application further provide a manufacturing method for a composite current collector.

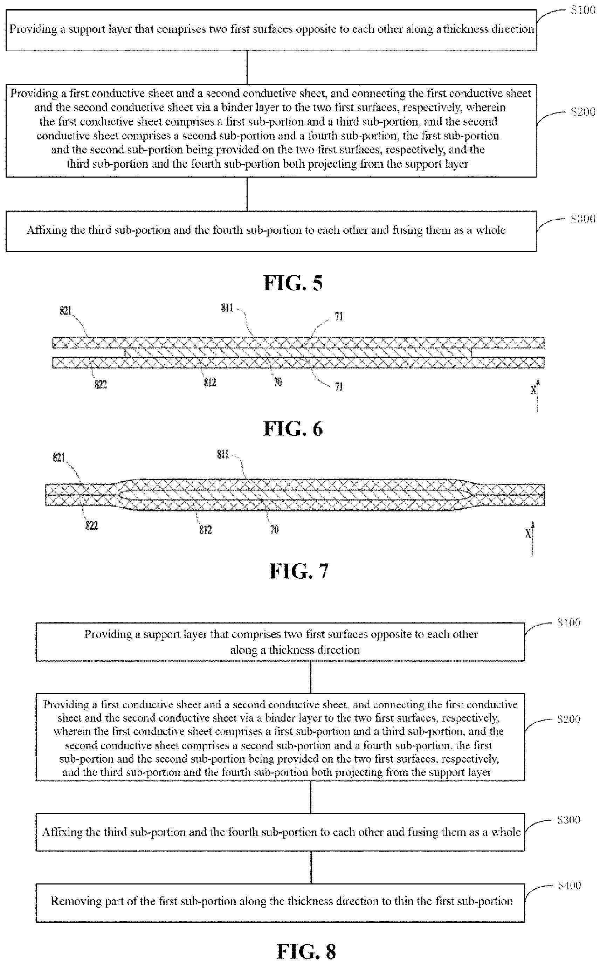

Fig. 5 is a schematic diagram of a manufacturing process for a composite current collector provided in some examples of the present application; Fig. 6 is a state schematic diagram of a manufacturing process for a composite current collector provided in some examples of the present application; and Fig. 7 is another state schematic diagram of a manufacturing process for a composite current collector provided in some examples of the present application.

As shown in Figs. 5 to 7, the manufacturing method comprises the following steps:

S100: providing a support layer that comprises two first surfaces opposite to each other along a thickness direction.
S200: providing a first conductive sheet and a second conductive sheet, and connecting the first conductive sheet and the second conductive sheet via a binder layer to the two first surfaces, respectively, wherein the first conductive sheet comprises a first sub-portion and a third sub-portion, and the second conductive sheet comprises a second sub-portion and a fourth sub-portion, the first sub-portion and the second sub-portion being provided on the two first surfaces, respectively, and the third sub-portion and the fourth sub-portion both projecting from the support layer.
S300, affixing the third sub-portion and the fourth sub-portion to each other and fusing them as a whole. For the composite current collector prepared according to the manufacturing method of the example of the present application, edges are flush during the slitting process. Therefore, the electrochemical performance of the secondary battery prepared using this composite current collector is excellent.

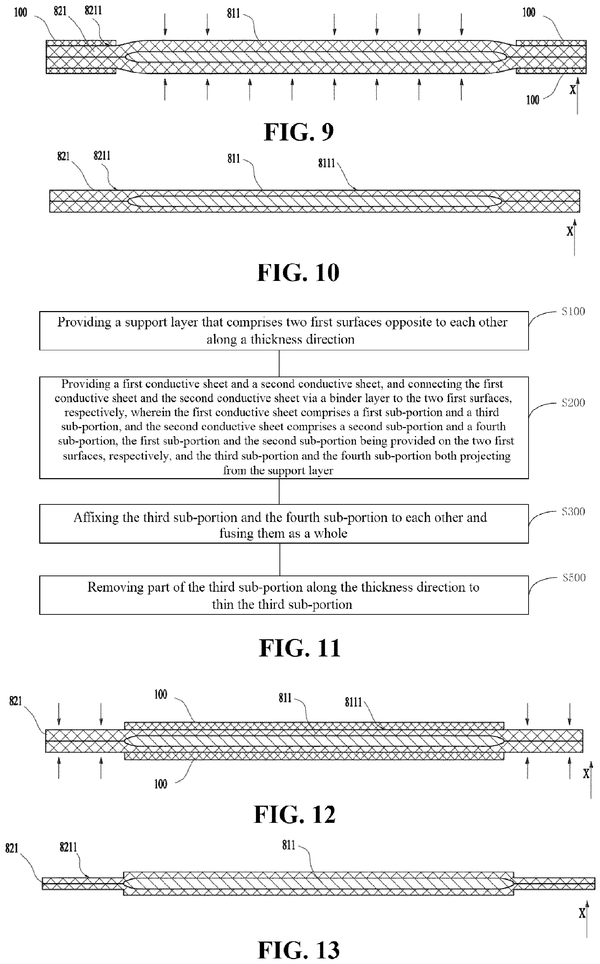

Fig. 8 is a flow chart of a manufacturing method for a composite current collector provided by some other examples of the present application; Fig. 9 is another state schematic diagram of a manufacturing process for a composite current collector provided in some examples of the present application; and Fig. 10 is another state schematic diagram of a manufacturing process for a composite current collector provided in some examples of the present application. The arrows in Fig. 9 indicate the direction of thinning.

As shown in Figs. 8 to 10, in some embodiments, after the step S300, the following steps are further included: S400: removing part of the first sub-portion along the thickness direction to thin the first sub-portion.

By thinning the first sub-portion, the thickness of the first sub-portion is relatively lower, which can improve the energy density of the secondary battery to some extent.

One of the two third surfaces 8111 of the thinned first sub-portion 811 can be flush with the second surface 8211 of the third sub-portion 821, and of course the thinned first sub-portion 811 can also project with respect to the second surfaces 8211 along the thickness direction X.

In step S400, in order to prevent the process of thinning the first sub-portion 811 from interfering with the third sub-portion 821, a protective layer 100 can be provided on the second surfaces 8211 of the third sub-portion 821, and the first sub-portion 811 is thinned on the basis that the third sub-portion 821 contains the protective layer 100, and then, after the first sub-portion 811 is thinned, the protective layer 100 is removed. In this way, the thickness of the third sub-portion 821 is substantially unaffected.

The material of the protective layer 100 is one or more of polymethyl methacrylate (PMMA), polymethacrylamide, polymethylisopropenyl ketone, polyisobutylene, or poly-$\alpha$-methylstyrene. Such a protective layer 100 is capable of being dissolved and removed after the first sub-portion 811 is thinned.

In some embodiments, after the step S300, the following steps are further included: removing part of the second sub-portion along the thickness direction to thin the second sub-portion.

The process of thinning the second sub-portion is as described in step S400 and will not be repeated herein. Herein, the reduced thicknesses of the first sub-portion and the second sub-portion due to thinning can be the same or different.

Fig. 11 is a flow chart of a manufacturing method for a composite current collector provided by some other examples of the present application; Fig. 12 is another state schematic diagram of a manufacturing process for a composite current collector provided in some examples of the present application; and Fig. 13 is another state schematic diagram of a manufacturing process for a composite current collector provided in some examples of the present application. The arrows in Fig. 12 indicate the direction of thinning.

As shown in Figs. 11 to 13, in some embodiments, after the step S300, the following steps are further included: S500: removing part of the third sub-portion along the thickness direction to thin the third sub-portion.

By thinning the third sub-portion 821, it is possible improve the energy density while ensuring the over-current capability.

In the thinned composite current collector, the first sub-portion 811 can project with respect to the second surfaces 8211 along the thickness direction X.

In step S500, in order to prevent the process of thinning the third sub-portion 821 from interfering with the first sub-portion 811, a protective layer 100 can be provided on the third surfaces 8111 of the first sub-portion 811, and the third sub-portion 821 is thinned on the basis that the first sub-portion 811 contains the protective layer 100, and then, after the third sub-portion 821 is thinned, the protective layer 100 is removed. In this way, the thickness of the first sub-portion 811 is substantially unaffected.

In some embodiments, after the step S300, the following steps are further included:

removing part of the fourth sub-portion along the thickness direction to thin the fourth sub-portion.

The process of thinning the fourth sub-portion is as described in step S500 and will not be repeated herein. Herein, the reduced thicknesses of the third sub-portion and the fourth sub-portion due to thinning can be the same or different.

Each of the above steps of thinning can be used in combination or separately. Exemplarily, after step S300, steps S400 and S500 may also be included at the same time. Alternatively, after step S300, step S400 is included. Or alternatively, after step S300, step S500 is included.

[Electrode sheet]

Examples of the present application further provide an electrode sheet.

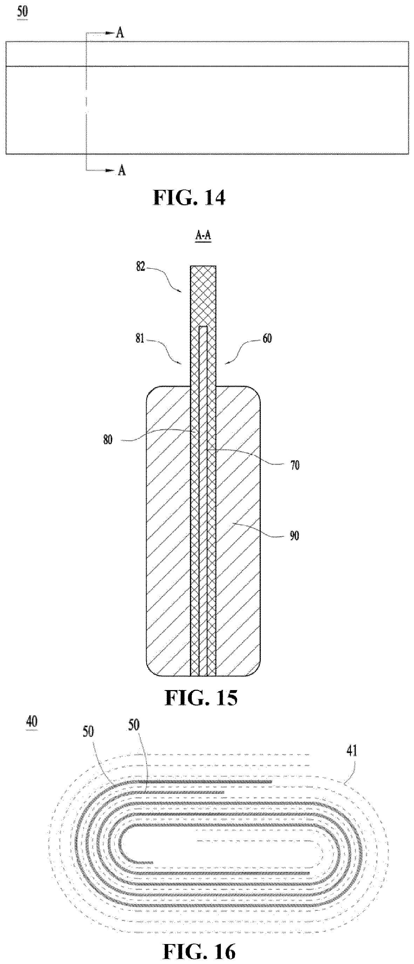

Fig. 14 is a structural schematic diagram of an electrode sheet provided in some examples of the present application; and Fig. 15 is a cross-sectional structural schematic diagram of an electrode sheet shown in Fig. 14 taken along the line A-A.

As shown in Figs. 14 and 15, the electrode sheet 50 of the example of the present application comprises a composite current collector 60 as described in any of the above examples of the present application and an active material layer 90, wherein the active material layer 90 is provided on the surface of the first portion 81 of the composite current collector 60. The secondary battery using the electrode sheet 50 of this structure has a more excellent electrochemical performance, especially its over-current capability and energy density. This electrode sheet 50 and the separator are formed into an electrode assembly by winding.

[Positive electrode sheet]

The positive electrode sheet comprises a positive composite current collector and a positive active material layer.

The main body material of the conductive layer of the positive composite current collector comprises aluminum or an aluminum-based alloy in the structural form of the composite current collector as described in any of the above examples of the present application.

The positive active material used in the positive active material layer may be a positive active material known in the art for use in secondary batteries. As an example, the positive active material may include at least one of the following materials: lithium-containing phosphate with olivine structure, lithium transition metal oxide, and their respective modified compounds. However, the present application is not limited to these materials, and other conventional materials that can be used as positive active materials may also be used. It is possible to use only one of these positive active materials alone, or to use more than two in combination. Here, examples of the lithium transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}C_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (such as $LiNi_{0.85}Co_{0.15}Al_{0.05}O_2$) and their respective modified compounds. Examples of the lithium-containing phosphate with olivine structure may include, but are not limited to, at least one of lithium iron phosphate

(such as LiFePO$_4$ (also abbreviated as LFP)), lithium iron phosphate-carbon composite, lithium manganese phosphate (such as LiMnPO$_4$), lithium manganese phosphate-carbon composite, lithium manganese iron phosphate, and lithium manganese iron phosphate-carbon composite.

In some embodiments, the positive active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive active material layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet can be prepared in the following manner: dispersing the above components for preparing the positive electrode sheet, such as the positive active material, the conductive agent, the second binder, and any other components, in a solvent (e.g., N-methyl pyrrolidone) to form a positive electrode slurry; and coating the positive electrode slurry on the positive composite current collector, and after processes such as oven drying and cold pressing, the positive electrode sheet can be obtained.

[Negative electrode sheet]

The negative electrode sheet comprises a negative composite current collector and a negative active material layer.

The main body material of the conductive layer of the negative composite current collector comprises copper or a copper-based alloy in the structural form of the composite current collector as described in any of the above examples of the present application.

The negative active material in the negative active material layer may be a negative active material known in the art for use in secondary batteries. As an example, the negative active material may include at least one of the following materials: artificial graphite, natural graphite, soft carbon, hard carbon, silicon-based material, tin-based material, and lithium titanate, etc. The silicon-based material may be selected from at least one of monolithic silicon, silicon-oxygen compound, silicon-carbon composite, silicon-nitrogen composite, and silicon alloy. The tin-based material may be selected from at least one of monolithic tin, tin-oxygen compound, and tin alloy. However, the present application is not limited to these materials, and other conventional materials that can be used as battery negative active materials may also be used. It is possible to use only one of these negative active materials alone, or to use more than two in combination.

In some embodiments, the negative active material layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative active material layer may further optionally include a conductive agent. The conductive agent may be selected from at least one of superconducting carbon, acetylene black, carbon black, Ketjen black, carbon dots, carbon nanotubes, graphene, and carbon nanofibers.

In some embodiments, the negative active material layer may further optionally include other additives, such as thickeners (e.g., sodium carboxymethyl cellulose (CMC-Na)), etc.

In some embodiments, the negative electrode sheet can be prepared in the following manner: dispersing the above components for preparing the negative electrode sheet, such as the negative active material, the conductive agent, the binder, and any other components, in a solvent (e.g., deionized water) to form a negative electrode slurry; and coating the negative electrode slurry on the negative composite current collector, and after processes such as oven drying and cold pressing, the negative electrode sheet can be obtained.

[Electrolyte]

The electrolyte plays the role of conduct ions between the positive electrode sheet and the negative electrode sheet. There is no specific limitation on the type of electrolyte in the examples of the present application, and it can be selected according to the requirement. For example, the electrolyte may be in a liquid, gel, or all-solid state.

In some embodiments, the electrolyte is an electrolyte solution. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, methylene carbonate, diethyl carbonate, dimethyl carbonate, dipropyl carbonate, methyl propyl carbonate, ethyl propyl carbonate, butylene carbonate, fluorinated ethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution may further optionally include an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

[Separator]

In some embodiments, the secondary battery also comprises a separator. The examples of the present application have no particular limitation on the type of the separator, and any well-known porous structure separator with good chemical stability and mechanical stability can be used.

In some embodiments, the material of the separator can be selected from at least one of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some embodiments, the positive electrode sheet, the negative electrode sheet, and the separator can be made into an electrode assembly by a winding process or a lamination process.

In some embodiments, the secondary battery may include an outer package. This outer package may be used to encapsulate the positive electrode sheet, the negative electrode sheet, the separator, and the electrolyte as described above.

In some embodiments, the outer package of the secondary battery may be a hard shell, e.g., a hard plastic shell, an aluminum shell, a steel shell, etc. The outer package of the secondary battery can also be a soft package, such as a pouch soft package. The material of the soft package can be plastic, and as plastic, polypropylene, polybutylene terephthalate, and polybutylene succinate can be enumerated.

[Secondary battery]

Examples of the present application further provide a secondary battery.

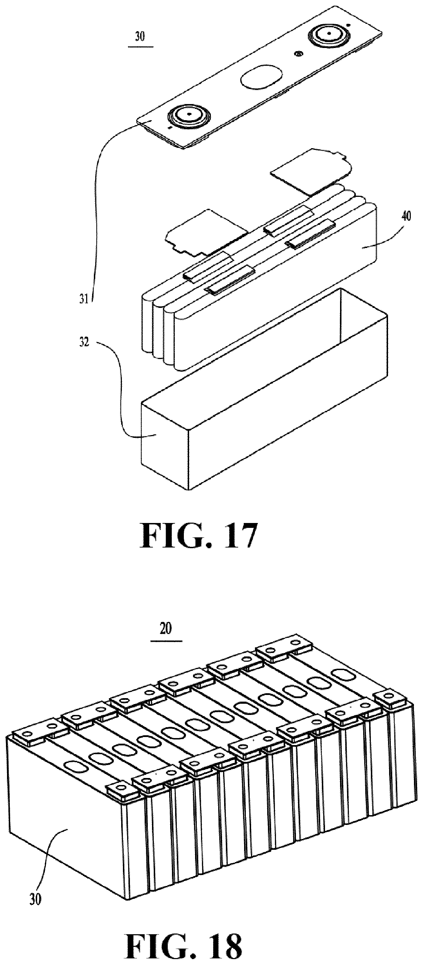

Fig. 16 is a structural schematic diagram of an electrode assembly of a secondary battery provided in some examples of the present application; and Fig. 17 is an exploded schematic diagram of a secondary battery provided in some examples of the present application.

As shown in Figs. 16 and 17, the secondary battery 30 comprises a top cover assembly 31 and a case 32, and an electrode assembly 40 and an electrolyte accommodated within the case 32. The electrode assembly 40 comprises an electrode sheet 50 and a separator 41. The electrode sheet 50 comprises a positive electrode sheet and a negative electrode sheet. During the charging and discharging process of the secondary battery 30, active ions are intercalated and deintercalated back and forth between the positive and negative electrode sheets. The electrolyte plays the role of conduct ions between the positive electrode sheet and the negative electrode sheet. The separator 41 is disposed between the positive electrode sheet and the negative electrode sheet, and mainly serves to prevent the short circuit of the positive and negative electrodes, and at the same time allows the ions to pass through. Specifically, the secondary battery can be a wound or laminated battery, such as one of a lithium-ion secondary battery, lithium primary battery, sodium-ion battery, and magnesium-ion battery, but it is not limited to this. Fig. 14 illustrates a wound electrode assembly.

In some embodiments, the positive electrode sheet comprises the positive electrode sheet of the second aspect examples of the present application. Since the secondary battery 30 of the example of the present application employs the electrode sheet of the second aspect of the present application, it has a better electrochemical performance compared with the conventional secondary batteries. Accordingly, the negative electrode sheet may be a conventional negative electrode sheet in this field, or the negative electrode sheet of the second aspect examples of the present application.

In some embodiments, the negative electrode sheet comprises the negative electrode sheet of the second aspect examples of the present application. Since the secondary battery 30 of the example of the present application employs the electrode sheet of the second aspect of the present application, it has a better electrochemical performance compared with the conventional secondary batteries. Accordingly, the positive electrode sheet may be a conventional positive electrode sheet in this field.

In some embodiments, the positive electrode sheet comprises the positive electrode sheet of the second aspect examples of the present application. The negative electrode sheet comprises the negative electrode sheet of the second aspect examples of the present application. Since the secondary battery 30 of the example of the present application employs the electrode sheet of the second aspect of the present application, it has a better electrochemical performance compared with the conventional secondary batteries.

The present application has no particular limitation on the shape of the secondary battery 30, which may be cylindrical, square, or any other shape. For example, Fig. 17 shows a secondary battery with a square structure as an example.

In some embodiments, the outer package of the secondary battery 30 may include the case 32 and the top cover assembly 31. Among them, the case 32 may include a bottom plate and side plates attached to the bottom plate, wherein the bottom plate and side plates enclose to form an accommodating cavity. The case 32 has an opening communicating with the accommodating cavity, and the top cover assembly 31 can cover the opening to close the accommodating cavity. The positive electrode sheet, the negative electrode sheet, and the separator 41 may form the electrode assembly 40 by a winding process or a lamination process. The electrode assembly 40 is encapsulated within the accommodating cavity. The electrolyte solution is infiltrated into the electrode assembly 40. The number of electrode assemblies 40 contained in the secondary battery 30 may be one or more, which may be selected by a person skilled in the art according to specific practical needs.

In some embodiments, the secondary battery 30 can be assembled into a battery module, and the number of secondary batteries contained in the battery module can be one or more, and the specific number can be selected by a person skilled in the art according to the application and capacity of the battery module.

FIG. 18 is a partial structural schematic diagram of a battery module provided in some examples of the present application.

As shown in Fig. 18, in the battery module 20, a plurality of secondary batteries 30 may be arranged sequentially along the direction of length of the battery module 20. Of course, they can be arranged in any other way. The plurality of secondary batteries 30 may further be secured by fasteners.

Optionally, the battery module 20 may further include a shell having an accommodating space in which the plurality of secondary batteries 30 are accommodated.

In some embodiments, the above battery modules can also be assembled into a battery pack, and the number of battery modules contained in the battery pack can be one or more, and the specific number can be selected by a person skilled in the art according to the application and capacity of the battery pack.

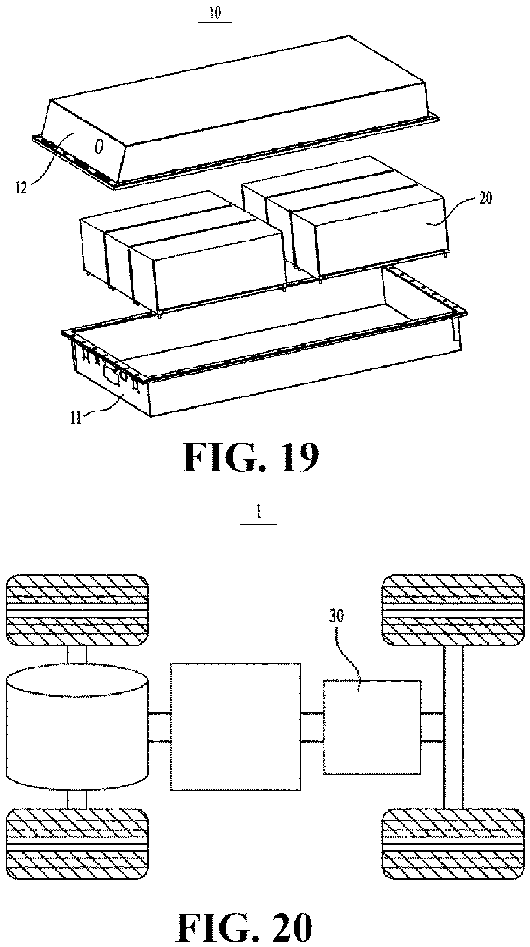

Fig. 19 is an exploded schematic diagram of a battery pack provided in some examples of the present application.

As shown in Fig. 19, a battery box as well as a plurality of battery modules 20 provided in the battery box may be included in the battery pack 10. The battery box comprises an upper box 12 and a lower box 11, wherein the upper box 12 can cover the lower box 11 and form an enclosed space for accommodating the battery modules 20. The plurality of battery modules 20 can be arranged in the battery box in an arbitrary manner.

In addition, the present application further provides an electrical apparatus.

Fig. 20 is a structural schematic diagram of an electrical apparatus provided in some examples of the present application.

As shown in Fig. 20, the electrical apparatus 1 comprises at least one of the secondary battery 30, the battery module, or the battery pack provided by the present application. The secondary battery 30, the battery module, or the battery pack may be used as a power source for the electrical apparatus or as an energy storage unit for the electrical apparatus. The electrical apparatus 1 may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module or the battery pack can be selected according to its usage needs.

This electrical apparatus 1 is an all-electric vehicle, a hybrid electric vehicle, or a plug-in hybrid electric vehicle, etc. In order to meet the high-power and high-energy density requirements of the secondary battery 30 for this electrical apparatus 1, a battery pack or battery module may be used.

As another example, the apparatus may be a mobile phone, a tablet, a laptop, etc. The device is generally required to be light and thin, and can use a secondary battery as a power source.

Examples

Examples of the present application will be described hereinafter. The examples described below are exemplary and are used only to explain the present application and are not to be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

Example 1

1. Preparation of positive composite current collector

A PET support layer (with a melting point of 251°C) with a thickness of 4.5 $\mu$m is selected, and the surface of the support layer is cleaned;

a polyurethane adhesive is coated on one of the surfaces of the support layer to form a binder layer (with a thickness of about 2 $\mu$m);
the above coating is pre-dried;
an aluminum layer is provided as a first conductive sheet on the pre-dried coating, wherein the first conductive sheet comprises a first sub-portion and a third sub-portion that enable the first conductive sheet and the support layer to form a first laminated body of the composite current collector;
the first laminated body is subjected to high temperature pressing and then cured after the pressing;
the polyurethane adhesive is coated on the other surface of the support layer to form a binder layer (with a thickness of about 2 $\mu$m);
an aluminum layer is provided as a second conductive sheet on the pre-dried coating, wherein the second conductive sheet comprises a second sub-portion and a fourth sub-portion that enable the second conductive sheet and the support layer to form a second laminated body of the composite current collector;
the second laminated body is subjected to high temperature pressing, and then cured after the pressing; a composite current collector containing the binder layer between the PET and aluminum layers is formed; the two aluminum layers form the first conductive sheet and the second conductive sheet, respectively,
wherein the first conductive sheet comprises a first sub-portion and a third sub-portion, and the second conductive sheet comprises a second sub-portion and a fourth sub-portion, the first sub-portion and the second sub-portion being provided on the two first surfaces, respectively, and the third sub-portion and the fourth sub-portion both projecting from the support layer, wherein the thicknesses of the first sub-portion, the second sub-portion, the third sub-portion, and the fourth sub-portion are all 5 $\mu$m, the thickness A of the first portion is 10 $\mu$m, and the thickness B of the second portion is 10 $\mu$m, with A/B = 1; and
the third sub-portion and the fourth sub-portion are affixed to each other and fused as a whole by: using a customized heating roller to heat the surface temperature to 675°C, and performing hot-pressing and fusing on the third sub-portion and the fourth sub-portion with a pressure of 60T.

2. Preparation of positive electrode sheet

The cathode active materials LiNi$_{0.8}$Co$_{0.1}$Mn$_{0.1}$O$_2$(NCM811), LiNi$_{0.5}$Co$_{0.2}$Mn$_{0.3}$O$_2$(NCM523), conductive carbon black, and binder polyvinylidene fluoride (PVDF) are mixed in an appropriate amount of N-methyl pyrrolidone (NMP) solvent with sufficient stirring in the weight ratio of 82:14:2:2 to form a uniform positive electrode slurry; and the positive electrode slurry is coated on the surface of the positive composite current collector, and a positive electrode sheet is obtained after oven drying, cold pressing, tab cutting, and other processes.

3. Negative composite current collector

A copper foil with a thickness of 6 $\mu$m is used.

4. Preparation of negative electrode sheet

The negative active material graphite, the conductive carbon black, the thickener sodium carboxymethyl cellulose (CMC), and the binder styrene butadiene rubber emulsion (SBR) are mixed in an appropriate amount of deionized water with sufficient stirring in the weight ratio of 96.5: 1.0: 1.0: 1.5 to form a uniform negative electrode slurry; and the negative electrode slurry is coated on the negative composite current collector, and a negative electrode sheet is obtained after oven drying and other processes.

5. Separator

APP film is used.

6. Preparation of electrolyte solution

Ethylene carbonate (EC) and ethyl methyl carbonate (EMC) in a volume ratio of 3:7 are mixed uniformly to obtain the organic solvent, and then 1 mol/L of $LiPF_6$ is dissolved uniformly in the above organic solvent.

7. Preparation of secondary battery

The positive electrode sheet, the separator, and the negative electrode sheet are sequentially stacked, then wound into a battery cell and put into a package case, and the above electrolyte solution is injected into the battery cell, and then the secondary battery is obtained after the sealing, resting, hot and cold pressing, chemical formation, and other processes.

Example 2

Unlike Example 1, the following steps are added after the hot pressing and fusing steps:

A PMMA protective layer is arranged on the outer surface of the third and fourth sub-portions separately: a PMMA-anisole solution is purchased as the initial coating, Teflon is pasted to the back roller of the coating machine at the positions corresponding to the third and fourth sub-portions for the purpose of padding, and the sizes of pads are designed to correspond exactly to the third and fourth sub-portions, and only the positions of the third and fourth sub-portions are coated when the PMMA protective layer is applied, and the oven temperature is set to 80 to 100°C, and the final thickness of the protective layer is about 30 $\mu$m after oven baking with a coating speed of 8 m/min;
the thicknesses of the first sub-portion and the second sub-portion are thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer on which no PMMA protective layer is provided, and after washing and oven drying, the thickness of the first sub-portion is 3 $\mu$m and the thickness of the second sub-portion is 3 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 3 $\mu$m, the thickness of the second sub-portion is 3 $\mu$m, the thickness of the third sub-portion is 5 $\mu$m, and the thickness of the fourth sub-portion is 5 $\mu$m. The thickness A of the first portion is 6 $\mu$m, and the thickness B of the second portion is 10 $\mu$m, with A/B = 0.6.

Example 3

Unlike Example 1, the following steps are added after the hot pressing and fusing steps:

A PMMA protective layer is arranged on the third and fourth sub-portions separately: a PMMA-anisole solution is purchased as the initial coating, Teflon is pasted to the back roller of the coating machine at the positions corresponding to the third and fourth sub-portions for the purpose of padding, and the sizes of pads are designed to correspond exactly to the third and fourth sub-portions, and only the positions of the third and fourth sub-portions are coated when the PMMA protective adhesive layer is applied, and the oven temperature is set to 80 to 100°C, and the final thickness of the protective layer is about 30 $\mu$m after oven baking with a coating speed of 8 m/min;
the thicknesses of the first sub-portion and the second sub-portion are thinned by means of chemical etching: the composite current collector coated with the protective layer in specific areas is passed at a carrying speed of 9 m/min through an etching tank containing a NaOH solution at a solution temperature of 60°C, so as to thin the thickness of the conductive layer on which no PMMA protective layer is provided, and after washing and oven drying, the thickness of the first sub-portion is 1 $\mu$m and the thickness of the second sub-portion is 1 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 1 $\mu$m, the thickness of the second sub-portion is 1 $\mu$m, the thickness of the third sub-portion is 5 $\mu$m, and the thickness of the fourth sub-portion is 5 $\mu$m. The thickness A of the first portion is 2 $\mu$m, and the thickness B of the second portion is 10 $\mu$m, with A/B = 0.2.

Example 4

Unlike Example 1, the following steps are added after the hot pressing and fusing steps:

A PMMA protective layer is arranged on the third and fourth sub-portions separately: a PMMA-anisole solution is purchased as the initial coating, Teflon is pasted to the back roller of the coating machine at the positions corresponding to the third and fourth sub-portions for the purpose of padding, and the sizes of pads are designed to correspond exactly to the third and fourth sub-portions, and only the positions of the third and fourth sub-portions are coated when the PMMA protective adhesive layer is applied, and the oven temperature is set to 80 to 100°C, and the final thickness of the protective layer is about 30 $\mu$m after oven baking with a coating speed of 8 m/min; the thicknesses of the first sub-portion and the second sub-portion are thinned by means of chemical etching: the composite current collector coated with the protective layer in specific areas is passed at a carrying speed of 9 m/min through an etching tank containing a NaOH solution at a solution temperature of 63°C, so as to thin the thickness of the conductive layer on which no PMMA protective layer is provided, and after washing and oven drying, the thickness of the first sub-portion is 0.75 $\mu$m and the thickness of the second sub-portion is 0.75 $\mu$m; the PMMA protective layer is removed: the etched composite current collector is passed at a carrying speed of 10 m/min through a dissolution tank containing acetone at an acetone temperature of 50°C, and then the PMMA layer can be removed from the surface; and the thickness of the first sub-portion in this example is 0.75 $\mu$m, the thickness of the second sub-portion is 0.75 $\mu$m, the thickness of the third sub-portion is 10 $\mu$m, and the thickness of the fourth sub-portion is 5 $\mu$m. The thickness A of the first portion is 5 $\mu$m, and the thickness B of the second portion is 10 $\mu$m, with A/B = 0.15.

Example 5

Unlike Example 1, the following steps are added after the hot pressing and fusing steps:

A PMMA protective layer is arranged on the third and fourth sub-portions separately: a PMMA-anisole solution is purchased as the initial coating, Teflon is pasted to the back roller of the coating machine at the positions corresponding to the third and fourth sub-portions for the purpose of padding, and the sizes of pads are designed to correspond exactly to the third and fourth sub-portions, and only the positions of the third and fourth sub-portions are coated when the PMMA protective adhesive layer is applied, and the oven temperature is set to 80 to 100°C, and the final thickness of the protective layer is about 30 $\mu$m after oven baking with a coating speed of 8 m/min the thicknesses of the first sub-portion and the second sub-portion are thinned by means of chemical etching: the composite current collector coated with the protective layer in specific areas is passed at a carrying speed of 8 m/min through an etching tank containing a NaOH solution at a solution temperature of 65°C, so as to thin the thickness of the conductive layer on which no PMMA protective layer is provided, and after washing and oven drying, the thickness of the first sub-portion is 0.5 $\mu$m and the thickness of the second sub-portion is 0.5 $\mu$m; the PMMA protective layer is removed: the etched composite current collector is passed at a carrying speed of 10 m/min through a dissolution tank containing acetone at an acetone temperature of 50°C, and then the PMMA layer can be removed from the surface; and the thickness of the first sub-portion in this example is 0.5 $\mu$m, the thickness of the second sub-portion is 0.5 $\mu$m, the thickness of the third sub-portion is 5 $\mu$m, and the thickness of the fourth sub-portion is 5 $\mu$m. The thickness A of the first portion is 1 $\mu$m, and the thickness B of the second portion is 10 $\mu$m, with A/B = 0.1.

Example 6

Unlike Example 1, the following steps are added after the hot pressing and fusing steps:
A PMMA protective layer is arranged on the third and fourth sub-portions separately: a PMMA-anisole solution is purchased as the initial coating, Teflon is pasted to the back roller of the coating machine at the positions corresponding to the third and fourth sub-portions for the purpose of padding, and the sizes of pads are designed to correspond exactly to the third and fourth sub-portions, and only the positions of the third and fourth sub-portions are coated when the PMMA protective adhesive layer is applied, and the oven temperature is set to 80 to 100°C, and the final thickness of the protective layer is about 30 $\mu$m after oven baking with a coating speed of 8 m/min.
The thickness of the first sub-portion is thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer on which no PMMA protective layer is provided, and after washing and oven drying, the thickness of the first sub-portion is 3 $\mu$m;

the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 3 $\mu$m, the thickness of the second sub-portion is 5 $\mu$m, the thickness of the third sub-portion is 5 $\mu$m, and the thickness of the fourth sub-portion is 5 $\mu$m. The thickness A of the first portion is 8 $\mu$m, and the thickness B of the second portion is 10 $\mu$m, with A/B = 0.8.

Example 7

Unlike Example 1, the following steps are added after the hot pressing and fusing steps:
A PMMA protective layer is arranged on the second and fourth sub-portions: a PMMA-anisole solution is purchased as the initial coating, and the second and fourth sub-portions are coated using the coating machine, wherein the oven temperature is set to 80 to 100°C, and the coating speed is 8m/min, and the final thickness of the protective layer is about 30 $\mu$m.

The thicknesses of the first sub-portion and the third sub-portion are thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer on which no PMMA protective layer is provided, and after washing and oven drying, the thickness of the first sub-portion and the third sub-portion is 3 $\mu$m;

the PMMA protective layer is removed: the etched composite current collector is passed at a carrying speed of about 10 m/min through a dissolution tank containing acetone at an acetone temperature of 50°C, and then the PMMA layer can be removed from the surface; and
the thickness of the first sub-portion in this example is 3 $\mu$m, the thickness of the second sub-portion is 5 $\mu$m, the thickness of the third sub-portion is 3 $\mu$m, and the thickness of the fourth sub-portion is 5 $\mu$m. The thickness A of the first portion is 8 $\mu$m, and the thickness B of the second portion is 8 $\mu$m, with A/B = 1.

Example 8

Unlike Example 1, the following steps are added after the hot pressing and fusing steps:

The thicknesses of the first sub-portion, the second sub-portion, the third sub-portion, and the fourth sub-portion are thinned directly by means of chemical etching: the composite current collector coated with the protective layer in specific areas is passed at a carrying speed of 11 m/min through an etching tank containing a NaOH solution at a solution temperature of 60°C, so as to thin the thickness of the conductive layer in the un-protected area, and after washing and oven drying, the thickness of the first sub-portion is 3 $\mu$m, the thickness of the second sub-portion is 3 $\mu$m, the thickness of the third sub-portion is 3 $\mu$m, and the thickness of the fourth sub-portion is 3 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 3 $\mu$m, the thickness of the second sub-portion is 3 $\mu$m, the thickness of the third sub-portion is 3 $\mu$m, and the thickness of the fourth sub-portion is 3 $\mu$m. The thickness A of the first portion is 6 $\mu$m, and the thickness B of the second portion is 6 $\mu$m, with A/B = 1.

Example 9

Unlike Example 1, the following steps are added after the hot pressing and fusing steps:

A PMMA protective layer is arranged on the first sub-portion, the second sub-portion, and the fourth sub-portion, separately;
the thickness of the third sub-portion is thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer in the un-protected area, and after washing and oven drying, the thickness of the third sub-portion is 3 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 5 $\mu$m, the thickness of the second sub-portion is 5 $\mu$m, the

thickness of the third sub-portion is 3 μm, and the thickness of the fourth sub-portion is 5 μm. The thickness A of the first portion is 10 μm, and the thickness B of the second portion is 8 μm, with A/B = 1.1.

Example 10

Unlike Example 1, the following steps are added after the hot pressing and fusing steps:

A connecting layer (tin layer) is formed between the first conductive sheet and the second conductive sheet: powder of tin is purchased and sieved through a 1 μm sieve to remove the powder with a particle size greater than 1 μm, and then added to NMP in a ratio of 98:2 by weight of tin powder to PVDF and stirred uniformly, and then the slurry containing tin particles is coated on the surface of the third sub-portion facing the fourth sub-portion and dried in an oven at a temperature of 80 to 100°C, so that the thickness of the tin layer is 1 μm;
the third sub-portion, the tin layer, and the fourth sub-portion are affixed to each other and fused as a whole, with a fusing temperature of 300°C and a pressure of 30T;
a PMMA protective layer is arranged on the first sub-portion: a PMMA-anisole solution is purchased as the initial coating, Teflon is pasted to the back roller of the coating machine at the positions corresponding to the first sub-portions for the purpose of padding, and the sizes of pads are designed to correspond exactly to the first sub-portions, and only the positions of the first sub-portions are coated when the PMMA protective adhesive layer is applied, and the oven temperature is set to 80 to 100°C, and the final thickness of the protective layer is about 30 μm after oven baking with a coating speed of 8 m/min;
the thickness of the third sub-portion is thinned by means of chemical etching: the composite current collector coated with the protective layer in specific areas is passed at a carrying speed of 12 m/min through an etching tank containing a NaOH solution at a solution temperature of 60°C, so as to thin the thickness of the conductive layer on which no PMMA protective layer is provided, and after washing and oven drying, the thickness of the third sub-portion is 4 μm;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 5 μm, the thickness of the second sub-portion is 5 μm, the thickness of the third sub-portion is 4 μm, the thickness of the fourth sub-portion is 5 μm, and the thickness of the tin layer is 1 μm . The thickness A of the first portion is 10 μm, and the thickness B of the second portion is 10 μm, with A/B = 1.

Example 11

Unlike Example 1, the following steps are added after the hot pressing and fusing steps:

A connecting layer (tin layer) is formed between the first conductive sheet and the second conductive sheet: powder of tin is purchased and sieved through a 2 μm sieve, and then added to NMP in a ratio of 98:2 by weight of tin powder to PVDF and stirred uniformly, and then the slurry containing tin particles is coated on the surface of the third sub-portion facing the fourth sub-portion and dried in an oven at a temperature of 80 to 100°C, so that the thickness of the tin layer is 2 μm;
the third sub-portion, the tin layer, and the fourth sub-portion are affixed to each other and fused as a whole, with a fusing temperature of 300°C and a pressure of 30T;
a PMMA protective layer is arranged on the first sub-portion: a PMMA-anisole solution is purchased as the initial coating, Teflon is pasted to the back roller of the coating machine at the positions corresponding to the first sub-portions for the purpose of padding, and the sizes of pads are designed to correspond exactly to the first sub-portions, and only the positions of the first sub-portions are coated when the PMMA protective adhesive layer is applied, and the oven temperature is set to 80 to 100°C, and the final thickness of the protective layer is about 30 μm after oven baking with a coating speed of 8 m/min;
the thickness of the third sub-portion is thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer on which no PMMA protective layer is provided, and after washing and oven drying, the thickness of the third sub-portion is 3 μm;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 5 μm, the thickness of the second sub-portion is 5 μm, the thickness of the third sub-portion is 3 μm, the thickness of the fourth sub-portion is 5 μm, and the thickness of the tin layer is 2 $\mu$m . The thickness A of the first portion is 10 $\mu$m, and the thickness B of the second portion is 10 $\mu$m, with A/B = 1.

Example 12

Unlike Example 1, the following steps are added after the hot pressing and fusing steps:

A connecting layer (tin layer) is formed between the first conductive sheet and the second conductive sheet: powder of tin is purchased and sieved through a 5 $\mu$m sieve to remove the powder with a particle size greater than 5 um, and then added to NMP in a ratio of 98:2 by weight of tin powder to PVDF and stirred uniformly, and then the slurry containing tin particles is coated on the surface of the third sub-portion facing the fourth sub-portion and dried in an oven at a temperature of 80 to 100°C, so that the thickness of the tin layer is 5 $\mu$m;
the third sub-portion, the tin layer, and the fourth sub-portion are affixed to each other and fused as a whole, with a fusing temperature of 310°C and a pressure of 35T;
a PMMA protective layer is arranged on the first and second sub-portions: a PMMA-anisole solution is purchased as the initial coating, and the sizes of pads are designed to correspond exactly to the first and second sub-portions, and only the positions of the first and second sub-portions are coated when the PMMA protective adhesive layer is applied, and the oven temperature is set to 80 to 100°C, and the final thickness of the protective layer is about 30 $\mu$m after oven baking with a coating speed of 8 m/min;
the thicknesses of the third sub-portion and the fourth sub-portion are thinned by means of chemical etching: the composite current collector coated with the protective layer in specific areas is passed at a carrying speed of 10 m/min through an etching tank containing a NaOH solution at a solution temperature of 60°C, so as to thin the thickness of the conductive layer on which no PMMA protective layer is provided, and after washing and oven drying, the thickness of the third sub-portion is 2.5 $\mu$m and the thickness of the fourth sub-portion is 2.5 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 5 $\mu$m, the thickness of the second sub-portion is 5 $\mu$m, the thickness of the third sub-portion is 2.5 $\mu$m, the thickness of the fourth sub-portion is 2.5 $\mu$m, and the thickness of the tin layer is 5 $\mu$m. The thickness A of the first portion is 10 $\mu$m, and the thickness B of the second portion is 10 $\mu$m, with A/B = 1.

Example 13

Unlike Example 1, the following steps are added after the hot pressing and fusing steps:

A connecting layer (polyaniline layer) is formed between the first conductive sheet and the second conductive sheet: powder of polyaniline in the conductive state is purchased, ground to refine the particles, and sieved through a 2 $\mu$m sieve to remove the powder with a particle size greater than 2 $\mu$m, and then added to NMP in a ratio of 99:1 by weight of polyaniline particles to PVDF, heated at 100°C in the NMP solution and stirred uniformly under vacuum, and then the slurry containing the polyaniline is coated on the surface of the third sub-portion facing the fourth sub-portion and dried in an oven at a temperature of 80 to 100°C, so that the thickness of the polyaniline layer is 2 $\mu$m;
the third sub-portion, the polyaniline layer, and the fourth sub-portion are affixed to each other and fused as a whole, with a fusing temperature of 370°C and a pressure of 35T;
a PMMA protective layer is arranged on the first sub-portion: a PMMA-anisole solution is purchased as the initial coating, and the sizes of pads are designed to correspond exactly to the first sub-portion, and only the positions of the first sub-portions are coated when the PMMA protective adhesive layer is applied, and the oven temperature is set to 80 to 100°C, and the final thickness of the protective layer is about 30 $\mu$m after oven baking with a coating speed of 8 m/min;
the thickness of the third sub-portion is thinned by means of chemical etching: the composite current collector coated with the protective layer in specific areas is passed at a carrying speed of 11 m/min through an etching tank containing a NaOH solution at a solution temperature of 60°C, so as to thin the thickness of the conductive layer on which no PMMA protective layer is provided, and after washing and oven drying, the thickness of the third sub-portion is 3 $\mu$m;
the PMMA protective layer is removed: the etched composite current collector is passed at a carrying speed of 10 m/min through a dissolution tank containing acetone at an acetone temperature of 50°C, and then the PMMA layer can be removed from the surface; and
the thickness of the first sub-portion in this example is 5 $\mu$m, the thickness of the second sub-portion is 5 $\mu$m, the thickness of the third sub-portion is 3 $\mu$m, the thickness of the fourth sub-portion is 5 $\mu$m, and the thickness of the polyaniline layer is 2 $\mu$m . The thickness A of the first portion is 10 $\mu$m, and the thickness B of the second portion is 10 $\mu$m, with A/B = 1.

Example 14

1. Preparation of negative composite current collector

APP support layer (with a melting point of 189°C) with a thickness of 4.5 $\mu$m is selected, and the surface of the support layer is cleaned;

the polyurethane adhesive is coated on one of the surfaces of the support layer to form a binder layer (with a thickness of 2 um);
the coating is pre-dried;
a copper layer is provided as a first conductive sheet on the pre-dried coating, wherein the first conductive sheet comprises a first sub-portion and a third sub-portion, a tin layer is coated on the third sub-portion, and the thickness of the tin layer is 2 $\mu$m, the third sub-portion and the fourth sub-portion are affixed to each other and fused as a whole, and then hot pressing and fusing is applied to only the third sub-portion and the fourth sub-portion by a customized hot pressing roller, with the pressure being 35 T and the temperature being 300°C, to form a first laminated body for forming a composite current collector;
the first laminated body is subjected to high temperature pressing, and then cured after the pressing; a composite current collector containing the binder layer between the PET and copper layers is formed; the two copper layers form the first conductive sheet and the second conductive sheet, respectively,
wherein the first conductive sheet comprises a first sub-portion and a third sub-portion, and the second conductive sheet comprises a second sub-portion and a fourth sub-portion, the first sub-portion and the second sub-portion being provided on the two first surfaces, respectively, and the third sub-portion and the fourth sub-portion both projecting from the support layer, wherein, the thicknesses of the first sub-portion, the second sub-portion, the third sub-portion, and the fourth sub-portion are all 5 $\mu$m, the thickness of the tin connecting layer is 2 um, the thickness A of the first portion is 10 $\mu$m, and the thickness B of the second portion is 12 $\mu$m, with A/B = 0.83

2. Preparation of negative electrode sheet

The negative active material graphite, the conductive carbon black, the thickener sodium carboxymethyl cellulose (CMC), and the binder styrene butadiene rubber emulsion (SBR) are mixed in an appropriate amount of deionized water with sufficient stirring in the weight ratio of 96.5: 1.0: 1.0: 1.5 to form a uniform negative electrode slurry; and the negative electrode slurry is coated on the negative composite current collector, and a negative electrode sheet is obtained after oven drying and other processes.

3. Positive composite current collector

An aluminum foil with a thickness of 13 $\mu$m is used.

4. Preparation of positive electrode sheet

The cathode active materials $LiNi_{0.8}Co_{0.1}Mn_{0.1}O_2$(NCM811), $LiNi_{0.5}Co_{0.2}Mn_{0.3}O_2$(NCM523), conductive carbon black, and binder polyvinylidene fluoride (PVDF) are mixed in an appropriate amount of N-methyl pyrrolidone (NMP) solvent with sufficient stirring in the weight ratio of 82:14:2:2 to form a uniform positive electrode slurry; and the positive electrode slurry is coated on the positive composite current collector, and a positive electrode sheet is obtained after oven drying and other processes.

5. Separator

APP film is used.

6. Preparation of electrolyte solution

Ethylene carbonate (EC) and ethyl methyl carbonate (EMC) in a volume ratio of 3:7 are mixed uniformly to obtain the organic solvent, and then 1 mol/L of $LiPF_6$ is dissolved uniformly in the above organic solvent.

7. Preparation of secondary battery

The positive electrode sheet, the separator, and the negative electrode sheet are sequentially stacked, then wound into a battery cell and put into a package case, and the above electrolyte solution is injected into the battery cell, and then the secondary battery is obtained after the sealing, resting, hot and cold pressing, chemical formation, and other processes.

Comparative Example 1

A PP film material with a thickness of 4.5 $\mu$m is selected as the support layer, an aluminum foil with a thickness of 0.5 $\mu$m is arranged on the upper and lower surfaces as the conductive layer, and an externally connected aluminum foil is welded on the edge of the conductive layer through the transfer welding process for cutting the tabs.

Method for performance test

1. Test of volume energy density of secondary battery

At room temperature, the secondary battery is charged for the first time with a current of 1C rate, and the charging is conducted at constant current and constant voltage with a termination voltage of 4.2V and a cutoff current of 0.05C; then it is discharged with a current of 1C rate and a discharge termination voltage of 2.8V, and the discharge capacity Cb and the discharge plateau voltage U are recorded at the first cycle of the secondary battery.
The length (L), width (W), and height (H) of the battery are measured using a soft ruler or steel ruler with a minimum division value of 1 mm, and the volumetric energy density of the secondary battery is calculated by the following equation:

$$\text{Volume energy density} = Cb*U/(L*W*H).$$

2. Direct current resistance (DCR) detection:

The test conditions are that: the secondary battery is discharged at 50% SOC with a 4C rate (the constant current being denoted as I) for 30s at the room temperature, and the voltage drop before and after discharge is $\Delta$V, DCR=$\Delta$V/I.

Table 1

| | First portion | | | Second portion | | | A/B | Connecting layer | | Performance of the secondary battery | |
| | Thickness of the first sub-portion/ $\mu$m | Thickness of the second sub-portion/ $\mu$m | A/$\mu$m | Thickness of the third sub-portion/ $\mu$m | Thickness of the fourth sub-portion/ $\mu$m | B/ $\mu$m | | Material | Thickness/ $\mu$ m | Energy density of the secondary battery/( Wh/L) | Over-current capability DCR(m$\Omega$) |
|---|---|---|---|---|---|---|---|---|---|---|---|
| Example 1 | 5 | 5 | 10 | 5 | 5 | 10 | 1 | / | / | 475 | 1.50 |
| Example 2 | 3 | 3 | 6 | 5 | 5 | 10 | 0.6 | / | / | 488 | 1.53 |
| Example 3 | 1 | 1 | 2 | 5 | 5 | 10 | 0.2 | / | / | 511 | 1.58 |
| Example 4 | 0.75 | 0.75 | 1.5 | 5 | 5 | 10 | 0.15 | / | / | 517 | 1.64 |
| Example 5 | 0.5 | 0.5 | 1 | 5 | 5 | 10 | 0.1 | / | / | 521 | 1.70 |
| Example 6 | 3 | 5 | 8 | 5 | 5 | 10 | 0.8 | / | / | 483 | 1.52 |
| Example 7 | 3 | 5 | 8 | 3 | 5 | 8 | 1 | / | / | 485 | 1.55 |
| Example 8 | 3 | 3 | 6 | 3 | 3 | 6 | 1 | / | / | 490 | 1.59 |
| Example 9 | 5 | 5 | 10 | 3 | 5 | 8 | 1.25 | / | / | 476 | 1.54 |
| Example 10 | 5 | 5 | 10 | 4 | 5 | 10 | 1 | Tin | 1 | 475 | 1.50 |
| Example 11 | 5 | 5 | 10 | 3 | 5 | 10 | 1 | Tin | 2 | 475 | 1.50 |
| Example 12 | 5 | 5 | 10 | 2.5 | 2.5 | 10 | 1 | Tin | 5 | 474 | 1.51 |
| Example 13 | 5 | 5 | 10 | 3 | 5 | 10 | 1 | Polyaniline | 2 | 473 | 1.52 |
| Example 14 | 5 | 5 | 10 | 5 | 5 | 12 | 0.83 | Tin | 2 | 447 | 1.50 |
| Comparative Example 1 | 0.5 | 0.5 | 1 | / | / | / | / | / | / | 501 | 1.97 |

EP 4 228 038 A1

As can be seen from Table 1, in Comparative Example 1, a transfer welding process is used to weld the edges of the conductive layer and the externally connected aluminum foil, and thus there are two separate layers of aluminum foil on the top and bottom in the welding zone, and there exists welding in the welding zone. This welding method will limit the welding strength to a certain extent, and will increase the thickness of the tabs in the welding zone, in which case, although the over-current capability can be improved, the over-current capability and energy density of the secondary battery are relatively low. Compared to Comparative Example 1, Comparative Example 5 uses hot-melt connection, and the over-current capability and energy density of its secondary battery are significantly improved.

In Examples 1 to 5, as the thickness of the first portion decreases, the A/B value gradually decreases and the energy density of the secondary battery gradually increases, but at the same time, the DCR also gradually increases. As can be seen from Table 1, when A/B is 0.2 to 1, the energy density and DCR of the secondary battery are superior. When A/B <0.2, DCR increases significantly.

In Examples 6 to 9, by differentiating the thicknesses of different areas of the second portion, the energy density and over-current capability of the secondary battery can be adjusted, and the secondary battery can adapt to different application scenarios.

In Examples 10 to 13, by adding a metal connecting layer or a conductive polymer connecting layer between the third sub-portion and the fourth sub-portion, the temperature of the hot-press fusion can be reduced and the machining difficulty can be reduced, especially the temperature of the hot-press fusion can be reduced to, for example, below 400°C; and the secondary battery of Examples 10 to 12 can maintain an energy density and over-current capability similar to those of the direct hot-press fusion of Example 1. It can be seen that the metal connecting layer facilitates the machining of the composite current collector, and substantially has no adverse effect on the energy density and over-current capability of the secondary battery.

The energy density and over-current capability of the secondary battery of Example 14 are excellent, so it can be seen that the composite current collector of the examples of the present application is not only suitable for the preparation of a positive composite current collector, but also suitable for a negative composite current collector, and is thus universal.

Although the present application has been described with reference to the preferred embodiments, various improvements can be made thereto and components thereof can be replaced with equivalents without departing from the scope of the present application. In particular, the various technical features mentioned in the various embodiments can be combined in any way, as long as there is no structural conflict. The present application is not limited to the particular embodiments disclosed herein, but comprises all technical solutions that fall within the scope of the claims.

**Claims**

1. A composite current collector, comprising:

   a support layer having two first surfaces opposite to each other along a thickness direction; and
   a conductive layer provided on the two first surfaces, the conductive layer comprising a first portion and a second portion, wherein
   the first portion comprises a first sub-portion and a second sub-portion provided on the two first surfaces, respectively, and the second portion comprises a third sub-portion and a fourth sub-portion, the third sub-portion and the first sub-portion being integrally provided, the fourth sub-portion and the second sub-portion being integrally provided, the third sub-portion and the fourth sub-portion both projecting from the support layer along a first direction, and the third sub-portion and the fourth sub-portion being affixed to each other and fused as a whole.

2. The composite current collector according to claim 1, wherein
   the third sub-portion, an end portion of the support layer along the first direction, and the fourth sub-portion are affixed to each other and fused as a whole.

3. The composite current collector according to claim 2, wherein
   the end portion along the first direction has a width of 1 mm to 10 mm, optionally 5 mm to 8 mm.

4. The composite current collector according to any one of claims 1 to 3, wherein
   the third sub-portion comprises two second surfaces opposite to each other along the thickness direction, and the first sub-portion projects with respect to the second surfaces along the thickness direction.

5. The composite current collector according to any one of claims 1 to 3, wherein

the third sub-portion comprises two second surfaces opposite to each other along the thickness direction; and the first sub-portion comprises two third surfaces opposite to each other along the thickness direction, one of the two third surfaces being flush with the second surface.

6. The composite current collector according to any one of claims 1 to 5, wherein the first portion has a thickness of A and the second portion has a thickness of B, wherein $0.03 \leq A/B \leq 1$; optionally, $0.2 \leq A/B \leq 1$.

7. The composite current collector according to any one of claims 1 to 6, wherein

   the first sub-portion has a thickness greater than or equal to that of the second sub-portion; and/or
   the third sub-portion has a thickness greater than or equal to that of the fourth sub-portion.

8. The composite current collector according to any one of claims 1 to 7, wherein the second portion further comprises a connecting layer disposed between the third sub-portion and the fourth sub-portion, and the connecting layer has a melting point less than that of the third sub-portion.

9. The composite current collector according to claim 8, wherein

   the connecting layer comprises at least one of a metal layer and an organic conductive polymer layer;
   optionally, the material of the metal layer comprises at least one of tin, indium, bismuth and cadmium; and
   optionally, the material of the organic conductive polymer layer comprises at least one of polypyrrole, polythiophene, polyaniline, polyacetylene, c, and polyphenylene acetylene.

10. The composite current collector according to claim 8 or 9, wherein the connecting layer has a thickness of 1 $\mu$m to 5 $\mu$m.

11. A manufacturing method for a composite current collector, comprising:

    providing a support layer that comprises two first surfaces opposite to each other along a thickness direction;
    providing a first conductive sheet and a second conductive sheet, and connecting the first conductive sheet and the second conductive sheet to the two first surfaces, respectively, wherein the first conductive sheet comprises a first sub-portion and a third sub-portion, and the second conductive sheet comprises a second sub-portion and a fourth sub-portion, the first sub-portion and the second sub-portion being provided on the two first surfaces , respectively, and the third sub-portion and the fourth sub-portion both projecting from the support layer; and
    affixing the third sub-portion and the fourth sub-portion to each other and fusing them as a whole.

12. The method according to claim 11, further comprising:
    removing part of the first sub-portion along the thickness direction to thin the first sub-portion.

13. The method according to claim 11 or 12, further comprising:
    removing part of the third sub-portion along the thickness direction to thin the third sub-portion.

14. An electrode sheet, comprising:
    an active material layer and the composite current collector according to any one of claims 1 to 10 or a composite current collector prepared according to the method according to any one of claims 11 to 13, wherein the active material layer is provided on a surface of the first portion of the composite current collector.

15. A secondary battery, comprising the electrode sheet according to claim 14.

16. A battery module, comprising the secondary battery according to claim 15.

17. A battery pack, comprising the secondary battery according to claim 15 or the battery module according to claim 16.

18. An electrical apparatus, comprising the secondary battery according to claim 15, the battery module according to claim 16, or the battery pack according to claim 17.

<u>60</u>

# FIG. 1

<u>60</u>

# FIG. 2

<u>60</u>

# FIG. 3

<u>60</u>

# FIG. 4

```
                                                                                    ┌─ S100
┌──────────────────────────────────────────────────────────────────────────┐
│ Providing a support layer that comprises two first surfaces opposite to each │
│ other along a thickness direction                                            │
└──────────────────────────────────────────────────────────────────────────┘
                                      │
                                                                                    ┌─ S200
┌──────────────────────────────────────────────────────────────────────────┐
│ Providing a first conductive sheet and a second conductive sheet, and        │
│ connecting the first conductive sheet and the second conductive sheet via a  │
│ binder layer to the two first surfaces, respectively, wherein the first       │
│ conductive sheet comprises a first sub-portion and a third sub-portion, and   │
│ the second conductive sheet comprises a second sub-portion and a fourth        │
│ sub-portion, the first sub-portion and the second sub-portion being provided  │
│ on the two first surfaces, respectively, and the third sub-portion and the    │
│ fourth sub-portion both projecting from the support layer                     │
└──────────────────────────────────────────────────────────────────────────┘
                                      │
                                                                                    ┌─ S300
┌──────────────────────────────────────────────────────────────────────────┐
│ Affixing the third sub-portion and the fourth sub-portion to each other and   │
│ fusing them as a whole                                                        │
└──────────────────────────────────────────────────────────────────────────┘
```

## FIG. 5

## FIG. 6

## FIG. 7

```
                                                                                    ┌─ S100
┌──────────────────────────────────────────────────────────────────────────┐
│ Providing a support layer that comprises two first surfaces opposite to each │
│ other along a thickness direction                                            │
└──────────────────────────────────────────────────────────────────────────┘
                                      │
                                                                                    ┌─ S200
┌──────────────────────────────────────────────────────────────────────────┐
│ Providing a first conductive sheet and a second conductive sheet, and        │
│ connecting the first conductive sheet and the second conductive sheet via a  │
│ binder layer to the two first surfaces, respectively, wherein the first       │
│ conductive sheet comprises a first sub-portion and a third sub-portion, and   │
│ the second conductive sheet comprises a second sub-portion and a fourth        │
│ sub-portion, the first sub-portion and the second sub-portion being provided  │
│ on the two first surfaces, respectively, and the third sub-portion and the    │
│ fourth sub-portion both projecting from the support layer                     │
└──────────────────────────────────────────────────────────────────────────┘
                                      │
                                                                                    ┌─ S300
┌──────────────────────────────────────────────────────────────────────────┐
│ Affixing the third sub-portion and the fourth sub-portion to each other and   │
│ fusing them as a whole                                                        │
└──────────────────────────────────────────────────────────────────────────┘
                                      │
                                                                                    ┌─ S400
┌──────────────────────────────────────────────────────────────────────────┐
│ Removing part of the first sub-portion along the thickness direction to thin  │
│ the first sub-portion                                                         │
└──────────────────────────────────────────────────────────────────────────┘
```

## FIG. 8

FIG. 9

FIG. 10

| Providing a support layer that comprises two first surfaces opposite to each other along a thickness direction | S100 |
| --- | --- |
| Providing a first conductive sheet and a second conductive sheet, and connecting the first conductive sheet and the second conductive sheet via a binder layer to the two first surfaces, respectively, wherein the first conductive sheet comprises a first sub-portion and a third sub-portion, and the second conductive sheet comprises a second sub-portion and a fourth sub-portion, the first sub-portion and the second sub-portion being provided on the two first surfaces, respectively, and the third sub-portion and the fourth sub-portion both projecting from the support layer | S200 |
| Affixing the third sub-portion and the fourth sub-portion to each other and fusing them as a whole | S300 |
| Removing part of the third sub-portion along the thickness direction to thin the third sub-portion | S500 |

FIG. 11

FIG. 12

FIG. 13

50

A

A

**FIG. 14**

A-A

82

81                    60

80                    70

90

**FIG. 15**

40      50      50           41

**FIG. 16**

**FIG. 17**

**FIG. 18**

# FIG. 19

# FIG. 20

<div align="center">

**INTERNATIONAL SEARCH REPORT**

</div>

| | |
|---|---|
| | International application No. |
| | **PCT/CN2021/137135** |

**A. CLASSIFICATION OF SUBJECT MATTER**

H01M 4/66(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 集流, 集电, 加强, 增强, 支撑, 基底, 基板, 极耳, batter+, cell?, current, collector?, reinfoc+, strengthen+, enhance+, support+, base??, tab

**C. DOCUMENTS CONSIDERED TO BE RELEVANT**

| Category* | Citation of document, with indication, where appropriate, of the relevant passages | Relevant to claim No. |
|---|---|---|
| X | CN 112259742 A (SHANGHAI LANJUN NEW ENERGY TECHNOLOGY CO., LTD.) 22 January 2021 (2021-01-22) description, paragraphs 35-64, and figures 1-4 | 1-18 |
| X | CN 112397722 A (SHANGHAI LANJUN NEW ENERGY TECHNOLOGY CO., LTD.) 23 February 2021 (2021-02-23) description, paragraphs 40-72, and figures 1-6 | 1-18 |
| X | CN 113066986 A (ZHUHAI COSMX BATTERY CO., LTD.) 02 July 2021 (2021-07-02) description, paragraphs 23-56, and figures 1-4 | 1 |
| A | CN 112751037 A (XIAMEN HAICHEN NEW ENERGY TECHNOLOGY CO., LTD.) 04 May 2021 (2021-05-04) entire document | 1-18 |
| A | JP 2006128038 A (NISSAN MOTOR CO., LTD.) 18 May 2006 (2006-05-18) entire document | 1-18 |

☐ Further documents are listed in the continuation of Box C. ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 August 2022** | **20 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/137135**

| Patent document cited in search report | | | Publication date (day/month/year) | Patent family member(s) | Publication date (day/month/year) |
|---|---|---|---|---|---|
| CN | 112259742 | A | 22 January 2021 | None | |
| CN | 112397722 | A | 23 February 2021 | None | |
| CN | 113066986 | A | 02 July 2021 | None | |
| CN | 112751037 | A | 04 May 2021 | None | |
| JP | 2006128038 | A | 18 May 2006 | None | |

Form PCT/ISA/210 (patent family annex) (January 2015)